# DEMANDE DE BREVET EUROPEEN

(11) **EP 4 734 301 A1**
(43) Date de publication de la demande: **29.04.2026**
(21) Numéro de dépôt: 25209971.8
(22) Date de dépôt: 21.10.2025
(51) Int. Cl.: H02B 13/035, H01B 17/42, H01H 85/48, H01H 85/00

(54) **APPAREIL ÉLECTRIQUE DE MOYENNE TENSION**

(30) Priorité: 23.10.2024 FR 2411557
(71) Demandeur: SCHNEIDER ELECTRIC INDUSTRIES SAS, 92500 Rueil-Malmaison (FR)
(72) Inventeur: BONFILS, Jean-Michel, 38000 Grenoble (FR)
(74) Mandataire: Plasseraud IP

(57) **Abrégé**

Il est proposé un appareil électrique (100) de moyenne tension, comprenant :
- une paroi (20) configurée pour être à un premier potentiel électrique (V1),
- un conducteur électrique (2) configuré pour être à un deuxième potentiel électrique (V2) différent du premier potentiel électrique (V1),
- un tube (1) traversant la paroi (20) et entourant le conducteur électrique (2),
- un manchon (3) en matériau isolant,
dans lequel le manchon (3) entoure le tube (1) et est en contact avec une surface externe (4) du tube (1).

## Description

### Domaine technique

La présente invention se rapporte au domaine des appareils électriques de moyenne tension, c'est-à-dire dont la tension nominale de fonctionnement est comprise entre 1 kV et 52 kV.

Ces appareils font partie d'un réseau de distribution électrique de type moyenne tension.

### Technique antérieure

Il est connu de disposer certains composants électriques, par exemple des puit-fusibles ou des traversées isolantes, dans une enceinte pressurisée contenant un gaz électriquement isolant, tel que l'hexafluorure de soufre. Ce gaz, possédant d'excellente propriétés diélectriques, permet d'assurer une isolation électrique et d'éviter la formation d'arcs électriques entre les différents conducteurs électriques présents dans l'enceinte. Cependant, ce gaz présente aussi un fort pouvoir de réchauffement climatique, et il est donc souhaitable de ne pas l'utiliser. Il est ainsi possible d'utiliser à la place des gaz présentant un faible potentiel de réchauffement, tel que l'air, l'azote ou le dioxyde de carbone. Ces gaz possèdent une plus faible tenue diélectrique que le gaz à remplacer. Le pouvoir isolant peut être amélioré en augmentant la pression du gaz contenu dans l'enceinte. Toutefois, une augmentation sensible de pression nécessite de rigidifier la structure de l'enceinte afin d'éviter des déformations excessives. Par ailleurs, il est souhaitable de réduire la taille des installations, ce qui demande de rapprocher les conducteurs électriques les uns des autres, et augmente donc les contraintes d'isolation diélectrique. Une augmentation de pression peut ne pas suffire à obtenir les performances attendues.

Il existe donc un besoin de disposer d'appareils électriques de moyenne tension dans laquelle l'isolation diélectrique est améliorée, notamment au niveau des puit-fusibles ou des traversées isolantes.

### Résumé

**A** cette fin, l'invention propose un appareil électrique de moyenne tension, comprenant :
- une paroi configurée pour être à un premier potentiel électrique,
- un conducteur électrique configuré pour être à un deuxième potentiel électrique différent du premier potentiel électrique,
- un tube en matériau isolant, traversant la paroi et entourant le conducteur électrique,
- un manchon en matériau isolant,
dans lequel le manchon entoure le tube et est en contact avec une surface externe du tube.

Le manchon permet de réduire les contraintes diélectriques à la surface du tube à proximité de la paroi. La tenue en tension de l'appareil électrique est ainsi améliorée.

Les caractéristiques listées dans les paragraphes suivant peuvent être mises en œuvre indépendamment les unes des autres ou selon toutes les combinaisons techniquement possibles :
La paroi peut faire partie d'une enceinte contenant une partie du conducteur électrique, une partie du tube et le manchon.

La paroi est métallique.

Le premier potentiel électrique est par exemple celui de la masse (ou terre).

Le deuxième potentiel électrique est par exemple le potentiel d'une phase d'un réseau triphasé moyenne tension. Le deuxième potentiel électrique correspond ainsi à la haute tension du réseau.

Selon un exemple de réalisation, le conducteur électrique traverse la paroi.

Le tube est cylindrique.

Le tube est en matériau électriquement isolant.

Le tube est par exemple en résine époxy ou en matériau thermoplastique d'ingénierie.

Le tube et le conducteur électrique sont coaxiaux.

Le manchon est cylindrique.

L'enceinte peut être étanche. L'enceinte peut contenir un gaz à une pression supérieure à la pression atmosphérique.

Selon un aspect de l'appareil électrique, le manchon comprend :
- une première portion en contact avec la surface externe du tube, la première portion ayant une forme complémentaire avec la surface externe du tube,
- une deuxième portion prolongeant la première portion selon une direction axiale, la deuxième portion étant distante de la surface externe du tube.

La forme du manchon permet d'augmenter la distance de cheminement le long du manchon, et donc d'améliorer l'isolation diélectrique.

Selon un mode de réalisation, la première portion du manchon est de forme cylindrique.

Le tube peut avoir, dans la zone en contact avec le manchon, la forme d'un cylindre de révolution. Dans ce cas, la première portion du manchon a elle aussi la forme d'un cylindre de révolution.

Une surface radialement interne de la première portion est en contact avec la surface externe du tube.

Selon un mode de réalisation, l'intégralité de la surface radialement interne de la première portion est en contact avec la surface externe du tube.

Selon un mode de réalisation de l'appareil électrique, la deuxième portion est de forme évasée, la deuxième portion s'élargissant entre une zone de jonction avec la première portion et une extrémité libre de la deuxième portion.

Selon un exemple de mise en œuvre, la deuxième portion est de forme évasée, une distance radiale entre la deuxième portion et la surface externe du tube augmentant lorsque la distance axiale entre la deuxième portion et la première portion augmente.

Selon un mode de réalisation particulier, la deuxième portion du manchon est de forme conique.

Une génératrice de la deuxième portion de forme conique forme un angle compris entre 15° et 70° avec l'axe du cône.

La première portion de forme cylindrique et la deuxième portion de forme conique peuvent être coaxiales.

Selon un mode de réalisation, la première portion du manchon s'étend axialement selon une longueur comprise entre 10% et 50% d'un diamètre de la première portion.

Selon un mode de réalisation, la deuxième portion du manchon s'étend axialement selon une longueur comprise entre 10% et 30% du diamètre de la première portion.

Selon un mode de réalisation de l'appareil électrique, la deuxième portion du manchon est de forme sensiblement cylindrique, et un diamètre interne de la deuxième portion est supérieur à un diamètre externe du tube.

Selon un mode de réalisation de l'appareil électrique, le manchon est en contact avec la paroi.

La portion cylindrique du manchon comprend une surface axiale, et la surface axiale est en contact avec la paroi.

Selon un mode de réalisation, le manchon est en matériau élastomère.

Selon un aspect de l'appareil électrique, le manchon est contraint radialement.

Un taux d'extension radiale du manchon est compris entre 5% et 12%.

La surface externe du tube comprend une portion de réception du manchon. La portion de réception a une rugosité inférieure à 0,8 micron.

La surface radialement interne de la première portion du manchon a une rugosité inférieure à 0,8 micron.

Selon un mode de réalisation de l'appareil électrique, la première portion du manchon comprend une gorge débouchant dans une surface axiale de la première portion.

La surface axiale de la portion cylindrique du manchon comprend une première portion radialement interne et une deuxième portion radialement externe.
La première portion et la deuxième portion de la surface axiale sont séparées par la gorge.

La gorge est de forme annulaire.

La gorge et la portion cylindrique du manchon peuvent être coaxiales.

La gorge s'étend axialement selon une longueur comprise entre 5% et 15% du diamètre de la première portion du manchon.

A l'état libre du manchon, la gorge s'étend radialement selon une distance comprise entre 4% et 10% du diamètre de la première portion du manchon.

Selon un mode de réalisation, un fond de la gorge a une forme arrondie.

Un fond de la gorge a sensiblement la forme d'un demi-tore.

Selon un mode de réalisation, la gorge comprend un matériau électriquement semi-conducteur.

Par exemple, la gorge est revêtue d'une peinture électriquement semi-conductrice.

La peinture électriquement semi-conductrice est une peinture chargée de particules semi-conductrices.

Selon une variante de réalisation de l'appareil électrique, la gorge est remplie au moins en partie d'un élastomère électriquement semi-conducteur.

L'élastomère électriquement semi-conducteur est une résine silicone chargée de particules semi-conductrices.

La gorge peut être totalement remplie d'un élastomère électriquement semi-conducteur.

Selon un mode de réalisation de l'appareil électrique, la première portion du manchon comprend un ensemble de languettes électriquement conductrices s'étendant en direction de la paroi et en contact avec la paroi.

Les languettes s'étendent axialement depuis la surface axiale de la première portion du manchon.

Les languettes permettent d'assurer un contact électrique entre le matériau semi-conducteur de la gorge et la paroi, même lorsque la surface axiale du manchon n'est pas parfaitement plaquée contre la paroi.

Selon un mode de réalisation, l'appareil électrique comprend une tige électriquement conductrice s'étendant depuis la paroi vers un fond de la gorge, la tige électriquement conductrice étant en contact avec le matériau électriquement semi-conducteur de la gorge.

La tige conductrice permet de garantir un contact électrique entre la paroi et le matériau semi-conducteur de la gorge, même lorsque la surface axiale du manchon n'est pas parfaitement plaquée contre la paroi.

La tige électriquement conductrice peut être une vis métallique traversant la paroi.

Dans le cas d'un puit-fusible, le conducteur électrique comprend un fusible.

Une première borne du fusible est reçue dans un premier réceptacle connecté à une première portion de tige du conducteur électrique.
Une deuxième borne du fusible est reçue dans un deuxième réceptacle connecté à une deuxième portion de tige du conducteur électrique.

Selon un mode de réalisation, l'appareil électrique est configuré pour faire circuler un courant électrique dans un réseau électrique de moyenne tension comportant trois phases.

L'appareil électrique comporte respectivement pour chacune des phases :
- un conducteur électrique disposé dans l'enceinte,
- un tube traversant la paroi et entourant respectivement le conducteur électrique,
- un manchon entourant une surface extérieure du tube.

### Brève description des dessins

D'autres caractéristiques, détails et avantages apparaîtront à la lecture de la description détaillée ci-après, et à l'analyse des dessins annexés, sur lesquels :
[Fig. 1] est une représentation schématique d'un appareil électrique de moyenne tension,
[Fig. 2] est une vue en perspective d'un appareil électrique selon un mode de réalisation de l'invention,

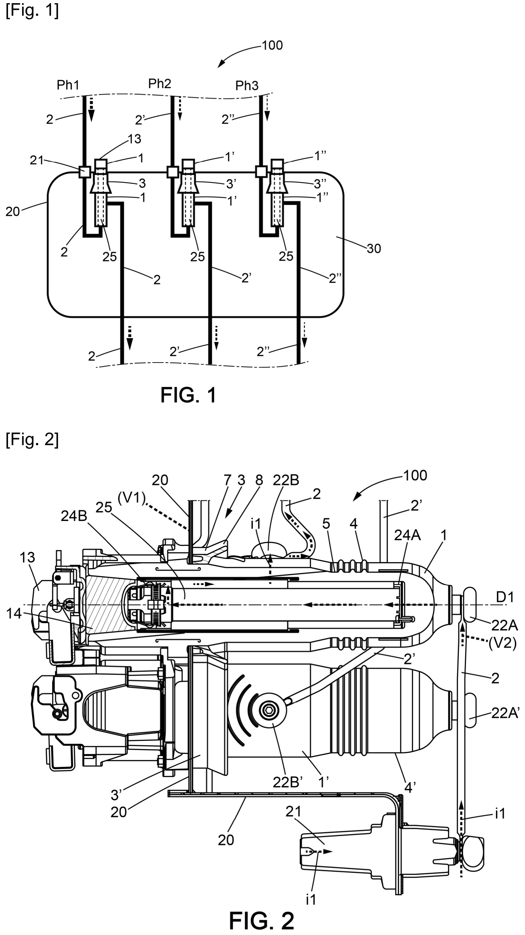

[Fig. 2] est une vue partielle, en coté et en coupe, d'un appareil électrique selon un mode de réalisation de l'invention,

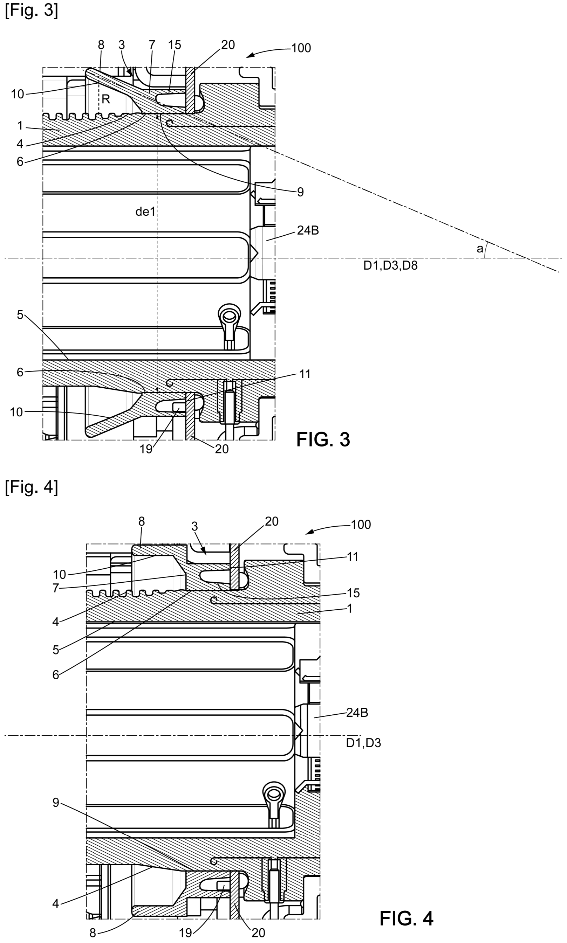

[Fig. 3] est une autre vue partielle, de côté et en coupe, de l'appareil électrique de la figure 2,
[Fig. 4] est une vue partielle, de côté et en coupe, d'une variante de réalisation de l'appareil électrique des figures 2 et 3,

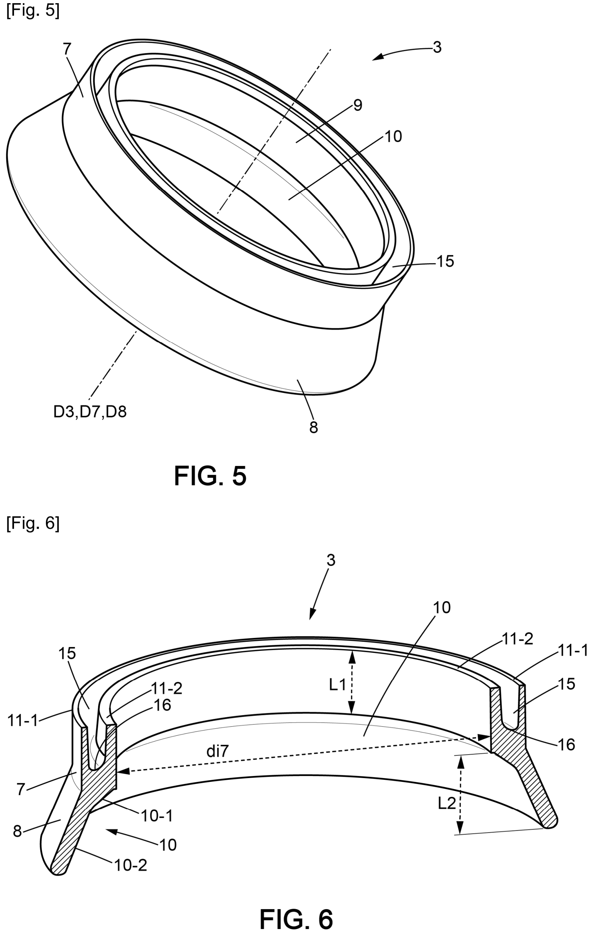

[Fig. 5] est une vue en perspective d'un manchon isolant de l'appareil électrique des figures 2 et 3,
[Fig. 6] est une coupe en perspective du manchon isolant de la figure 5,

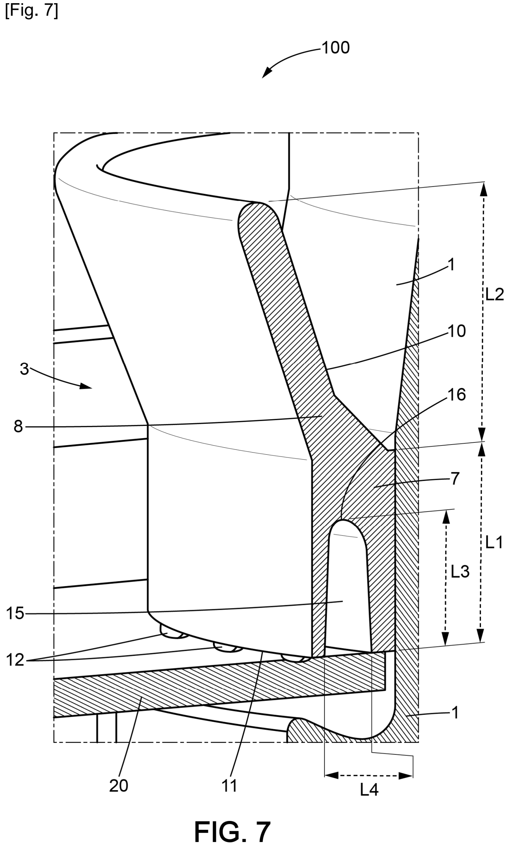

[Fig. 7] est coupe en perspective, partielle, d'une variante de réalisation de l'appareil électrique des figures 2 et 3.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations. Quand il est précisé qu'un dispositif comporte un élément donné, cela n'exclut pas la présence d'autres éléments dans ce dispositif.

On a représenté sur la figure 1 un appareil électrique 100 configuré pour faire circuler un courant électrique dans un réseau électrique de moyenne tension. Le réseau électrique comporte trois phases, désignées par Ph1, Ph2, Ph3.

L'appareil électrique 100 comporte respectivement pour chacune des phases Ph1, Ph2, Ph3 :
- un conducteur électrique 2,2',2" disposé dans l'enceinte 30,
- un tube 1,1',1" traversant la paroi 20 et entourant respectivement le conducteur électrique 2,2',2',
- un manchon 3,3',3" entourant une surface extérieure 4,4' du tube 1,1',1".

Ainsi, chacune des phases Ph1, Ph2, Ph3 de l'appareil électrique 100 comprend respectivement un conducteur électrique 2, 2', 2" disposé dans un tube 1,1',1" et traversant la paroi 20. Un manchon 3,3',3" est respectivement disposé sur le tube 1,1',1" correspondant.

Comme illustré notamment sur la figure 2, l'appareil électrique 100 de moyenne tension proposé comprend :
- une paroi 20 configurée pour être à un premier potentiel électrique V1,
- un conducteur électrique 2 configuré pour être à un deuxième potentiel électrique V2 différent du premier potentiel électrique V1,
- un tube 1 en matériau isolant, traversant la paroi 20 et entourant le conducteur électrique 2,
- un manchon 3 en matériau isolant,
dans lequel le manchon 3 entoure le tube 1 et est en contact avec une surface externe 4 du tube 1.

Le manchon 3 permet de réduire les contraintes diélectriques à la surface du tube 1 à proximité de la paroi 20. La tenue en tension de l'appareil électrique 100 est ainsi améliorée.

La paroi 20 peut faire partie d'une enceinte 30 contenant une partie du conducteur électrique 2, une partie du tube 1 et le manchon 3.
La paroi 20 est métallique.

Le premier potentiel électrique V1 est par exemple celui de la masse, pouvant être désignée aussi par le terme terre.
Le deuxième potentiel électrique V2 est par exemple le potentiel d'une phase d'un réseau triphasé moyenne tension. Le deuxième potentiel électrique correspond ainsi à la haute tension du réseau.
Sur la figure 2, le potentiel V1 et le potentiel V2 sont indiqués par un trait en pointillés.

Le conducteur électrique 2 traverse la paroi 20.

Le tube 1 est cylindrique.
Le tube 1 s'étend selon un axe D1.
Le tube 1 est en matériau électriquement isolant.
Le tube 1 est par exemple en résine époxy ou en matériau thermoplastique d'ingénierie.

Le tube 1 et le conducteur électrique 2 sont coaxiaux.
Un volume intérieur du tube 1 forme un volume de réception du conducteur électrique 2.

Le manchon 3 est cylindrique.
Le manchon 3 s'étend selon un axe D3.
Le manchon 3 et le tube 1 sont coaxiaux.

L'enceinte 30 peut être étanche. L'enceinte 30 peut contenir un gaz à une pression supérieure à la pression atmosphérique.
Le gaz peut être de l'air. Le gaz peut être un gaz diélectrique, comme l'hexafluorure de soufre.

Dans l'exemple illustré, le tube 1 correspond à un puit-fusible.
Le tube 1 contient ainsi un fusible 25, par lequel transite le courant électrique. Le fusible 25 est choisi de façon à fondre lorsque l'intensité du courant dépasse un seuil prédéfini, de façon à interrompre la circulation du courant en cas de surintensité, et ainsi protéger le circuit électrique.

La figure 2 détaille l'arrangement de l'appareil électrique 100 dans le cas où le tube 1 est un puit-fusible. Dans cet exemple d'application, le conducteur électrique 2 comprend le fusible 25. En d'autres termes, le fusible 25 fait partie du conducteur 2 disposé dans le tube 1.
Le tube 1 comprend au niveau d'une première extrémité axiale un premier connecteur 22A qui est en liaison électrique avec un premier réceptacle 24A recevant une première borne de connexion du fusible 25. Une première portion de tige du conducteur électrique 2 est connectée au niveau du premier connecteur 22A. La première borne du fusible 25 est ainsi reçue dans le premier réceptacle 24A connecté à une première portion de tige du conducteur électrique 2.
Le tube 1 comprend au niveau un deuxième connecteur 22B en liaison électrique avec un deuxième réceptacle 24B recevant une deuxième borne de connexion du fusible 25. Une deuxième portion de tige du conducteur électrique 2 est connectée au niveau du deuxième connecteur 22B. La deuxième borne du fusible 25 est ainsi reçue dans un deuxième réceptacle 24B connecté à une deuxième portion de tige du conducteur électrique 2.
Le premier réceptacle 24A et le deuxième réceptacle 24B sont conducteurs électriques, et sont par exemple en métal. Le premier réceptacle 24A et le deuxième réceptacle 24B sont à distance l'un de l'autre. Le courant électrique peut passer du premier réceptacle 24A au deuxième réceptacle 24B seulement en passant par le fusible 25.
Le premier réceptacle 24A et le deuxième réceptacle 24B font ainsi partie du conducteur 2 disposé dans le tube 1.
Les signes i1 illustrent schématiquement le passage du courant électrique, depuis un connecteur d'entrée 21 jusqu'à la portion du conducteur électrique 2 reliée au deuxième connecteur 22B.
Un capot 13 permet, lorsqu'il est en position fermée, de fermer l'extrémité axiale du puit-fusible. Le capot 13 peut être ouvert de façon à accéder au fusible 25, par exemple pour sa mise en place ou son remplacement en cas de besoin. En position fermée, le capot 13 appuie sur un isolant électrique 14, qui lui-même appuie sur le deuxième réceptacle 24B.

Sur la figure 2, les signes 22A' et 22B' désignent le premier connecteur et le deuxième connecteur du tube 1' correspondant à la deuxième phase de l'appareil électrique 100. Le manchon entourant le tube 1' est désigné par le signe 3'. Le manchon 3' est en contact avec une surface externe 4' du tube 1'.
Le tube correspondant à la troisième phase n'a pas été représenté.
Les trois tubes sont disposés dans l'appareil électrique 100 de façon à minimiser l'encombrement global, tout en minimisant les contraintes diélectriques.

Selon l'exemple illustré, correspondant à un puit-fusible, le conducteur électrique 2 est distant d'une surface interne 5 du tube 1.

Selon un autre exemple de réalisation, non illustré, le conducteur électrique 2 est en contact avec une surface interne 5 du tube 1.
Ce cas peut correspondre par exemple à une traversée isolante. Le tube 1 peut être surmoulé sur une surface latérale extérieure du conducteur électrique 2.
Dans le cas d'une traversée, le conducteur électrique 2 traverse le tube 1 d'une première extrémité axiale du tube 1 jusqu'à la deuxième extrémité axiale du tube 1.

Le conducteur électrique 2 comprend une tige rigide en cuivre. La tige rigide est pleine.

Comme détaillé notamment sur les figures 3 et 4, le manchon 3 comprend :
- une première portion 7 en contact avec la surface externe 4 du tube 1, la première portion 7 ayant une forme complémentaire avec la surface externe 4 du tube 1,
- une deuxième portion 8 prolongeant la première portion 7 selon une direction axiale, la deuxième portion 8 étant distante de la surface externe 4 du tube 1.

La forme du manchon permet d'augmenter la distance de cheminement le long du manchon 4, et ainsi de réduire les contraintes diélectriques.

La première portion 7 du manchon 3 est ici de forme cylindrique.

Dans l'exemple illustré, le tube 1 a, dans la zone en contact avec le manchon 3, la forme d'un cylindre de révolution. La première portion 7 du manchon 3 a elle aussi la forme d'un cylindre de révolution.

La première portion 7 du manchon 3 peut ainsi épouser la surface externe 4 du tube 1.
Autrement dit, une surface 9 radialement interne de la première portion 7 est en contact avec la surface externe 4 du tube 1.
Selon l'exemple illustré, l'intégralité de la surface 9 radialement interne de la première portion 7 est en contact avec la surface externe 4 du tube 1.
Le signe 6 désigne la zone de la surface extérieure 4 du tube 1 qui est en contact avec la première portion 7 du manchon 3.

Selon le mode de réalisation de l'appareil électrique 100 illustré notamment sur les figures 2 et 3, la deuxième portion 8 est de forme évasée. La deuxième portion 8 s'élargit entre une zone de jonction avec la première portion 7 et une extrémité libre de la deuxième portion 8.

La deuxième portion 8 est de forme évasée, et une distance radiale entre la deuxième portion 8 et la surface externe 4 du tube 1 augmente lorsque la distance axiale entre la deuxième portion 8 et la première portion 7 augmente.

Une surface 10 radialement interne de la deuxième portion 8 est en vis-vis de la surface externe 4 du tube 1 selon une direction radiale R.
La surface 10 comprend une première portion 10-1 s'étendant depuis la surface 9, et une deuxième portion 10-2 s'étendant depuis la première portion 10-1.

Selon le mode de réalisation illustré notamment sur les figures 2 et 3, la deuxième portion 8 du manchon 3 est de forme conique.
Une génératrice G de la deuxième portion 8 de forme conique forme un angle a compris entre 15° et 70° avec l'axe D8 du cône.

La première portion 7 de forme cylindrique et la deuxième portion 8 de forme conique sont coaxiales.
L'axe de la première portion 7 est désigné par D7 et l'axe de la deuxième portion 8 est désigné par D8. Selon l'exemple illustré, notamment sur la figure 5, ces deux axes sont confondus, et coïncident avec l'axe D3 du manchon 3.

Comme représenté sur les figures 6 et 7, la première portion 7 du manchon 3 s'étend axialement selon une longueur L1 comprise entre 10% et 50% d'un diamètre di7 de la première portion 7.
La deuxième portion 8 du manchon 3 s'étend axialement selon une longueur L2 comprise entre 10% et 30% du diamètre di7 de la première portion 7.
Les longueurs L1 et L2 sont mesurées le long de l'axe D3 du manchon 3.

La figure 4 illustre un mode de réalisation de l'appareil électrique 100 dans lequel la deuxième portion 8 du manchon 3 n'est pas conique.
Selon ce mode de réalisation, la deuxième portion 8 du manchon 3 est de forme sensiblement cylindrique, et un diamètre interne de la deuxième portion 8 est supérieur à un diamètre externe du tube 1.
On entend par sensiblement cylindrique qu'un léger angle est possible, correspondant à un angle de dépouille permettant un bon démoulage du manchon 3 lorsque celui-ci est moulé.

Selon les modes de réalisation illustrés sur les figures 2 à 4, le manchon 3 est en contact avec la paroi 20.

Le manchon 3 recouvre la zone formant interface entre le tube 1 et la paroi 20. La forme du manchon 3 lui permet de jouer le rôle d'un déflecteur pour les lignes de champ électrique, et permet de réduire les contraintes diélectriques.

La portion cylindrique 7 du manchon 3 comprend une surface axiale 11, et la surface axiale 11 est en contact avec la paroi 20.

Le manchon 3 est en matériau élastomère.
Le manchon 3 est par exemple formé par injection.

Le manchon 3 est contraint radialement.
Un taux d'extension radiale du manchon 3 est compris entre 5% et 12%. Ce taux d'extension radiale est choisi en fonction de l'élasticité de l'élastomère.

Le taux d'extension radiale du manchon 3 est défini par :
la différence entre le diamètre extérieur de1 du tube 1 et le diamètre interne di7 de la première portion 7 du manchon 3, lorsque le manchon 3 est à l'état libre, divisée par le diamètre extérieur de1 du tube 1.
On entend par état libre un état dans lequel le manchon 3 n'est pas monté sur le tube 1, et n'est pas déformé. L'état avant montage est ainsi un état libre, sans déformation du manchon 3.

La surface externe 4 du tube 1 comprend une portion de réception 6 du manchon 3.
Cette portion de réception est la portion de la surface externe 4 avec laquelle la surface radialement interne 9 du manchon 3 est en contact.
La portion de réception 6 a une rugosité Ra inférieure à 0,8 micron.
La rugosité Ra est mesurée conformément à la norme ISO 10110-8.
La surface 9 radialement interne de la première portion 7 du manchon 3 a également une rugosité Ra inférieure à 0,8 micron.

Le manchon 3 est ainsi suffisamment contraint, et les surfaces en contact 6,9 sont suffisamment lisses pour que l'interface entre le manchon 3 et le tube 1 soit dépourvue de lame d'air. Autrement dit, la faible rugosité des surfaces 6,9 en contact, ainsi que la contrainte subie par le manchon 3 lorsque celui-ci est disposé sur le tube 1, font que les molécules d'air sont expulsées de l'interface entre les pièces en contact lorsque le manchon 3 est mis en place autour du tube 1.

Selon l'exemple illustré, la première portion 7 du manchon 3 comprend une gorge 15 débouchant dans une surface axiale 11 de la première portion 7.

Comme on peut le voir particulièrement sur la figure 6, la surface axiale 11 de la portion cylindrique 7 du manchon 3 comprend une première portion 11-1 radialement interne et une deuxième portion 11-2 radialement externe.
La première portion 11-1 et la deuxième portion 11-2 de la surface axiale 11 sont séparées par la gorge 15.

La gorge 15 est de forme annulaire.
La gorge 15 et la portion cylindrique 7 du manchon 3 sont ici coaxiales.

La première portion 11-1 de la surface axiale 11 a une largeur constante. Cette largeur est mesurée selon une direction radiale.
La deuxième portion 11-2 de la surface axiale 11 a aussi une largeur constante. La largeur est mesurée selon une direction radiale.
La largeur de la première portion 11-1 peut être égale à la largeur de la deuxième portion 11-2.

La gorge 15 s'étend axialement selon une longueur L3, schématisée sur la figure 7, comprise entre 5% et 15% du diamètre di7 de la première portion 7 du manchon 3.

A l'état libre du manchon 3, la gorge 15 s'étend radialement selon une distance L4 comprise entre 4% et 10% du diamètre di7 de la première portion 7 du manchon 3.

La gorge 15 comporte un fond 16. Le fond 16 de la gorge 15 a une forme arrondie.
Un fond 16 de la gorge 15 a sensiblement la forme d'un demi-tore.
L'axe du demi-tore est confondu avec l'axe de la deuxième portion 8 du manchon 3.

Selon un mode de réalisation, illustré sur les figures 5 et 6, la gorge 15 comprend un matériau électriquement semi-conducteur.

Par exemple, la gorge 15 est revêtue d'une peinture électriquement semi-conductrice.
La peinture électriquement semi-conductrice est une peinture chargée de particules semi-conductrices.
Toute la surface de la gorge 15, c'est-à-dire la portion comprise entre la première portion 11-1 de la surface axiale 11 et la deuxième portion 11-2 de la surface axiale 11, est revêtue d'une peinture électriquement semi-conductrice.
Le matériau dans lequel la gorge 15 est formé peut recevoir un traitement de surface favorisant l'adhésion de la peinture semi-conductrice.

Selon une variante de réalisation de l'appareil électrique 100, la gorge 15 est remplie au moins en partie d'un élastomère électriquement semi-conducteur.
L'élastomère électriquement semi-conducteur peut être dans ce cas une résine silicone chargée de particules semi-conductrices.
La gorge 15 peut être totalement remplie d'un élastomère électriquement semi-conducteur.

La surface 9 radialement interne de la première portion 7 du manchon 3 est dépourvue de matériau semi-conducteur. En d'autres termes, le matériau semi-conducteur déposé sur les parois de la gorge n'est pas déposé sur la partie du manchon en contact avec la surface externe 4 du tube 1.
De la même manière, la surface latérale externe de la première portion 7 est isolante et ne comprend aucun matériau semi-conducteur. Il en est de même de la deuxième portion 8.
Lors de l'application de la peinture semi-conductrice ou de l'élastomère semi-conducteur, la surface 9 radialement interne ainsi que la surface latérale externe peuvent être temporairement masquées par un film de protection, de façon à éviter des projections ou des coulures du composé appliqué. Le film de protection est ensuite retiré pour obtenir la pièce finie.

Selon un mode de réalisation de l'appareil électrique 100, illustré sur la figure 7, la première portion 7 du manchon 3 comprend un ensemble de languettes électriquement conductrices 12 s'étendant en direction de la paroi 20 et en contact avec la paroi 20.

Les languettes 12 s'étendent axialement depuis la surface axiale 11 de la première portion 7 du manchon 3.
Les languettes 12 permettent d'assurer un contact électrique entre le matériau semi-conducteur de la gorge 15 et la paroi 20, même lorsque la surface axiale 11 du manchon 3 n'est pas parfaitement plaquée contre la paroi 20.
En effet, les languettes 12 ont une longueur supérieure à la valeur maximale du jeu axial pouvant être présent entre le manchon 3 et la paroi 20.

Selon les modes de réalisation des figures 3 et 4, l'appareil électrique 100 comprend une tige électriquement conductrice 19 s'étendant depuis la paroi 20 vers un fond 16 de la gorge 15, la tige électriquement conductrice 19 étant en contact avec le matériau électriquement semi-conducteur de la gorge 15.

La tige conductrice 19 permet de garantir un contact électrique entre la paroi 20 et le matériau semi-conducteur de la gorge 15, même lorsque la surface axiale 11 du manchon 3 n'est pas parfaitement plaquée contre la paroi 20.
La tige conductrice 19 est visible sur la figure 3 et sur la figure 4.
La tige électriquement conductrice 19 peut être une vis métallique traversant la paroi 20.
La longueur et le diamètre de la vis sont choisis de manière à assurer un contact avec la paroi de la gorge 15.

## Revendications

1. Appareil électrique (100) de moyenne tension, comprenant :
- une paroi (20) configurée pour être à un premier potentiel électrique (V1),
- un conducteur électrique (2) configuré pour être à un deuxième potentiel électrique (V2) différent du premier potentiel électrique (V1),
- un tube (1) traversant la paroi (20) et entourant le conducteur électrique (2),
- un manchon (3) en matériau isolant,
dans lequel le manchon (3) entoure le tube (1) et est en contact avec une surface externe (4) du tube (1).

2. Appareil électrique selon la revendication 1, dans lequel le manchon (3) comprend :
- une première portion (7) en contact avec la surface externe (4) du tube (1), la première portion (7) ayant une forme complémentaire avec la surface externe (4) du tube (1),
- une deuxième portion (8) prolongeant la première portion (7) selon une direction axiale, la deuxième portion (8) étant distante de la surface externe (4) du tube (1).

3. Appareil électrique selon la revendication 2, dans lequel la deuxième portion (8) est de forme évasée, la deuxième portion (8) s'élargissant entre une zone de jonction avec la première portion (7) et une extrémité libre de la deuxième portion (8).

4. Appareil électrique selon la revendication précédente, dans lequel la deuxième portion (8) du manchon (3) est de forme conique.

5. Appareil électrique selon l'une des revendications précédentes, dans lequel le manchon (3) est en contact avec la paroi (20).

6. Appareil électrique selon l'une des revendications précédentes, dans lequel le manchon (3) est en matériau élastomère.

7. Appareil électrique selon l'une des revendications précédentes, dans lequel le manchon (3) est contraint radialement.

8. Appareil électrique selon l'une des revendications précédentes en combinaison avec la revendication 2, dans lequel la première portion (7) du manchon (3) comprend une gorge (15) débouchant dans une surface axiale (11) de la première portion (7),
la gorge (15) comprenant un matériau électriquement semi-conducteur.

9. Appareil électrique selon la revendication précédente, dans lequel la gorge (15) est revêtue d'une peinture électriquement semi-conductrice.

10. Appareil électrique selon l'une des revendications 8 ou 9, dans lequel la gorge (15) est remplie au moins en partie d'un élastomère électriquement semi-conducteur.

11. Appareil électrique selon l'une des revendications précédentes en combinaison avec la revendication 2, dans lequel la première portion (7) du manchon (3) comprend un ensemble de languettes (12) s'étendant en direction de la paroi (20) et en contact avec la paroi (20).

12. Appareil électrique selon la revendication précédente, dans lequel les languettes (12) s'étendent axialement depuis la surface axiale (11) de la première portion (7) du manchon (3).

13. Appareil électrique selon l'une des revendications 8 à 10, comprenant une tige électriquement conductrice (19) s'étendant depuis la paroi (20) vers un fond de la gorge (15), la tige électriquement conductrice (19) étant en contact avec le matériau électriquement semi-conducteur de la gorge (15).

14. Appareil électrique selon l'une des revendications précédentes, configuré pour faire circuler un courant électrique dans un réseau électrique de moyenne tension comportant trois phases (Ph1, Ph2, Ph3),
l'appareil électrique (20) comportant respectivement pour chacune des phases :
- un conducteur électrique (2,2',2") disposé dans l'enceinte (30),
- un tube (1,1',1") traversant la paroi (20) et entourant respectivement le conducteur électrique (2,2',2"),
- un manchon (3,3',3") entourant une surface extérieure du tube (1,1',1").
